# EUROPEAN PATENT SPECIFICATION

(11) **EP 0 879 528 B1**
(45) Date of publication and mention of the grant of the patent: **18.04.2001**
(21) Application number: 97902471.8
(22) Date of filing: 04.02.1997
(51) Int. Cl.: H04M 3/30

(54) **TELECOMMUNICATIONS NETWORKS**
TELEKOMMUNIKATIONSNETZWERK
RESEAUX DE TELECOMMUNICATIONS

(30) Priority: 05.02.1996 EP 96300778; 05.02.1996 GB 9602247
(43) Date of publication of application: 25.11.1998
(73) Proprietor: BRITISH TELECOMMUNICATIONS public limited company, London EC1A 7AJ (GB)
(72) Inventor: HOY, Michael, Davey, Ipswich, Suffolk IP3 8QY (GB); CURTIS, Stephen, John, Ipswich, Suffolk IP11 7PU (GB)
(86) International application number: GB9700318
(87) International publication number: WO9729580

(56) References cited:
- WO-A-95/07588
- DE-A- 2 520 925
- US-A- 4 764 949

## Description

The present invention relates to telecommunications networks and more particularly to methods of monitoring signals supplied to customer premises equipment attached to such telecommunications networks.

As facilities provided by way of switched telephone networks become more complex, isolating faults in response to customer complaints can become time consuming. In many cases services provided from a remote location may pass through a number of switching centres and concentrators before reaching the customer connection at the network edge.

Customer premises equipment has also become more complex including units responsive to signals other than traditional ringing current and/or to signals additional to such ringing current. For example, in our co-pending European patent application number 94302756.5 (EP756795) a number of alerting signal types for non-ringing telephony applications are disclosed.

Such applications include, for example, telemetry, messaging and data transfer for switching domestic appliances on or off (also known as telecontrol). Many equipment manufacturers are designing equipments for use with such applications and in some cases a manufacturer rather than the public switch telephone network (PSTN) operator determines the signalling requirements.

In consequence of the complex signalling patterns which may arise and the difficulty of knowing to within an acceptable window when such signals will arrive at a line termination point at customer's premises the cost of sending suitably qualified maintenance personnel to customer's premises may be unacceptably high. However, this has often been the only way in which a network fault could be eliminated or signalling accuracy could be established.

It is known (for example from US-A-4,764,949) to provide a simple dial up, ring-back facility. This enables an engineer, for example, to dial a specific number and the telephone number of the customer's premises. After the engineer's call is cleared, the system calls the entered telephone number. It is also possible for the engineer to select test options to help in assessing line quality. Such tests do not eliminate the need for an engineer to attend a customer premises nor do they confirm live signalling through the network.

The present invention seeks to provide apparatus and methods in a telecommunications network to simplify the monitoring of signals (whether typical or specific) at remote locations.

According to one aspect of the present invention there is provided testing apparatus for connection to a monitoring point in a telecommunications network of the kind including means to establish a test connection through the network from network termination points to remote monitoring positions, the apparatus comprising: means to cause the establishment of first and second calls through the network to network termination points by way of separate transmission paths, means to hold the transmission path established by a first call and to connect the transmission path through a connection port to signal monitoring apparatus during the second call characterised in that the monitoring apparatus further includes means to simulate normal on hook and pre-signalling conditions to the connection port whereby signals transmitted to the network termination point on establishment of the second call are received by connected monitoring apparatus.

Preferably the testing apparatus includes means to permit monitoring of signals, for example loud speaker means connected across the line.

The apparatus may be used in combination with a caller display unit for example, whereby signals indicating calling line identity may be monitored. the apparatus may also be used in combination with a simulated telemetry interface unit for example whereby telemetry or control signals may be monitored or in combination with a short message display terminal whereby the accuracy of data or alpha-numeric information may be monitored.

According to another aspect of the invention there is provided a method of testing signalling in a telecommunications network comprising the steps of establishing a first call through a network to a remote point, causing a path to be established from the remote point to a monitoring location, releasing the first call, establishing a second call to the remote point and simulating network conditions at the monitoring location to cause apparatus connected at that location to respond to network signals forwarded to the remote point.

A telecommunications network including testing apparatus in accordance with the invention using the method of the invention will now be described by way of example only with reference to the accompanying drawing of which:

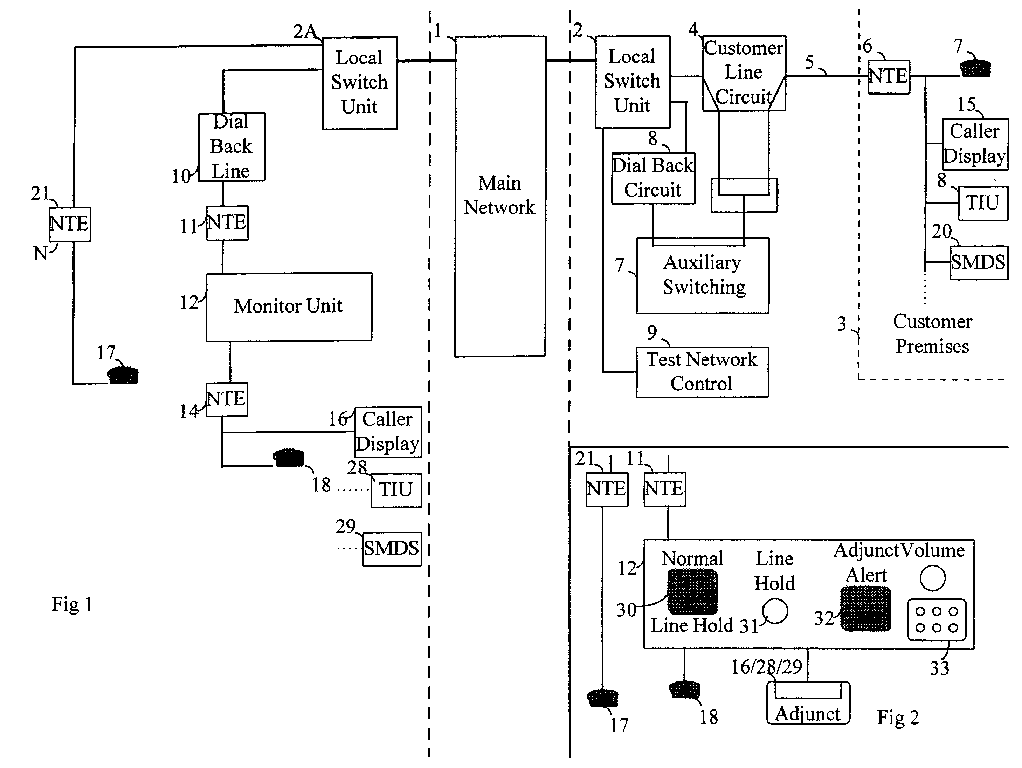

Figure 1 is a block schematic diagram of a telecommunications network using the invention, and
Figure 2 shows further details of the monitor unit of Figure 1.

Referring to the drawing, a typical switched telecommunications network is represented by main network 1 and comprises digital main switching units interconnected by optical fibre or other trunking arrangements. Local switch units (e.g. switch unit 2) are connected to customer premises 3 by way of customer line circuits 4 and local access network connections 5.

In the customer premises 3, the local access network connection terminates in a socket or other network termination (NTE) 6 to which the customer may connect suitable approved telecommunications apparatus such as a telephone 7. Other apparatus such as telemetry interface units 8 provided by the customer, network operator or other service provider, may be connected to the NTE 6. Also shown, for example, is a short message display terminal 20 which is used for displaying short text messages. For example, in a network based call answering service a message waiting message may be transmitted by way of a no ring call to the SMDS 20 to remind the customer to collect waiting information from the answering service.

Connected in the network by way of a local switch unit 2A testing stations or customer service centres (only part of one is shown) are provided. These centres are provided with various equipments to enable testing of the customer loop and other facilities without needing engineering support at the customer premises 3.

To permit such access switching, controllable across the network 1, is provided. Thus, within the customer line circuit 4 it is possible to split the line 5 and to set up a parallel connection through the network to a remote monitoring position.

Thus in the local exchange auxiliary switching 7 may be used to connect any link from a customer line circuit 4 to a dial back circuit 8, for example, which may be programmed to set up a call via the local switch unit 2 through the main network 1 to a predetermined or pre-selected telephone number represented as a dial back line 10. It will be noted that the called telephone number may effectively be anywhere in the world and could be selected at the time of establishing the test link. Thus, the expression pre-determined or pre-selected does not necessarily mean permanently pre-set.

The dial back line 10 is connected in the same way as a normal telephony line to a network termination 11. In the present invention a special monitoring unit 12 is connected to the NTE 11 to allow supervision of the remote customer line circuit 4.

The monitoring unit 12 includes a connection 14 of the same kind as NTE 6 to which any available customer premises equipment may be connected. To facilitate understanding of the purpose of the invention and its implementation, some understanding of signalling protocols used to provide non-ringing or pre-ringing information to NTEs (e.g. 6) is required.

Some examples of no-ring call signalling may be found in our co-pending PCT patent application number GB95/00853 (WO-A-95/28791 equivalent to EP-A-756795) filed 12 April 1995. This type of signalling is typically used to effect remote reading of metering information or control of domestic apparatus by way of the telemetry interface unit 8 without disturbing other apparatus connected to the telephone line.

Pre-ringing signalling may also be used. One service provided by the proprietor of the present application using pre-ringing signalling is a "caller display" service. In this service, prior to forwarding ringing current to the NTE 6, the network 1 forwards a DC line reversal and alerting tones followed by frequency-shift-keyed (FSK) signals indicating the source of the current call. A customer having a caller display unit 15 can be aware of who is calling prior to answering the call.

To alert the caller display unit 15 that signalling is about to be forwarded, a line reversal is effected by the network 1 to the NTE 6. On detection of the line reversal the caller display unit 15 monitors the line for up to five seconds for transmitted alert tones followed by FSK signals.

Should a customer complain that the caller display 15 is not accurate (or is not working) and request a line test, since the exact timing of the arrival of FSK signalling cannot be known, some difficulty in monitoring the functionality remotely occurs. Therefore an identical unit to the caller display 15, caller display 16 is connected to the "NTE" 14 of the monitor unit 12.

Using another telephone 17 connected by way of a respective NTE 21 the operator sets up a test network call through the network 1 to the customer line circuit 4. A test network control function 9 causes the customer line circuit split to be effected and a call back through the network to the NTE 11 and thus to the monitor unit 12. The monitor unit 12 is used to hold the dial back connection to customer line circuit 4 while the first call is cleared. Accordingly, tone alert, FSK, ringing or speech signals received at the line circuit 4 may be monitored by way of the parallel connection.

For the avoidance of doubt it is here noted that the test network control function may be embedded in a test network of the exchange switching system or may be in proprietary line testing equipment of the kind controlled by a network wide distributed computing arrangement.

Thus, if the operator now establishes a second call through the network 1, normal signalling conditions apply and FSK signals will be transmitted via the line circuit 4 to the NTE 6 and will also be received at the monitoring unit 12. However, immediately prior to transmitting the final digital of the customer's telephone number, the operator uses a key to cause the monitoring unit 12 to effect a line reversal to the "NTE" thus simulating the conditions normally expected by caller displays 15, 16 prior to receipt of signalling. Accordingly when tone alert and FSK signals are transmitted to the customer's caller display 15, the caller display 16, having been correspondingly primed, will also respond to the signals in the same manner. This enables signals at the edge of the network to be tested for accuracy without needing attendance at the customer premises 3.

Note that not only the transmission accuracy of the network signalling is established by using the test system in this manner but also the content of the transmission. This enables the detection of data errors further back in the computing elements of the managed service infrastructure. This will also identify faulty line cards for example in a communications circuit.

Now, while the invention has been described with reference to the proprietor's caller display service, it will be appreciated the system is equally suited to testing signalling to be forwarded to any kind of apparatus connectable to standard terminations. For example, signalling for a telemetry interface unit 8 may be tested by connecting a corresponding unit 28 at the customer service centre. Thus by allowing simulation at "NTE" 14 of pre-signalling (whether for pre-ringing or no-ringing signalling) conditions at the network edge, signalling accuracy by the network 1 can be remotely monitored. Similarly, for the short message display terminal 20 a corresponding test terminal 29 may be connected enabling monitoring of alpha-numeric or other data messages.

Referring to Figure 2, specifically the monitor unit 12 has connection points for a telephone 18 and for an adjunct, for example caller display 16, TIU 28, SMDS 29. Switching to enable the telephone 18 to be used in normal mode or in line hold mode is provided by switch 30 and when line hold is activated an illuminated indication 31 may be present.

Once a call is made from the telephone 17, as hereinbefore described, or telemetry or short message signalling is arranged the adjunct alert key 32 may be operated to cause line reversal or, with the aid of known circuits, to provide appropriate pre-ring signalling conditions to the adjunct 16.

In order to permit audible monitoring of the progress of a call through the network a loud speaker 33 may be provided connected across the line again in known manner.

The use of the monitor unit 12, whilst a call is in progress at the telephone 7 for monitoring for example out of band tones for providing information to callers by way of the short message display system 20, for example, will be appreciated.

## Claims

1. Testing apparatus for connection to a monitoring point in a telecommunications network of the kind including means to establish a test connection through the network from network termination points (6) to remote monitoring positions (12), the apparatus comprising:
means (17) to cause the establishment of first and second calls through the network to network termination points (11, 6) by way of separate transmission paths,
means (8) to hold the transmission path established by a first call and to connect the transmission path through a connection port (14) to signal monitoring apparatus (16, 28, 29) during the second call characterised in that the monitoring apparatus (12) further includes means (30, 32) to simulate normal on hook and pre-signalling conditions to the connection port (14) whereby signals transmitted to the network termination point (6, 11) on establishment of the second call are received by connected monitoring apparatus (16, 18, 29).

2. Testing apparatus as claimed in claim 1, in combination with monitoring apparatus (16) for displaying a calling line identity.

3. Testing apparatus as claimed in claim 1, in combination with apparatus (28) responsive to telemetry or other control signals.

4. Testing apparatus as claimed in claim 1, in combination with a short message display system (29) for monitoring alpha-numeric data signalling.

5. Testing apparatus as claimed in claim 1 or in combination with other apparatus as claimed in claim 2, 3 and 4, further including means (33) to permit audible monitoring of signalling on the transmission path.

6. A method of testing signalling in a telecommunications network comprising the steps of establishing a first call through a network to a remote point, causing a path to be established from the remote point to a monitoring location, holding the path and releasing the first call and establishing a second call to the remote point characterised in that network conditions are simulated at the monitoring location to cause apparatus connected at that location to respond to network signals forwarded to the remote point.

## Patentansprüche

1. Testgerät für die Verbindung mit einem Überwachungspunkt in einem Telekommunikationsnetz, das Vorrichtungen zum Einrichten einer Testverbindung zwischen Netzabschlußpunkten (6) und entfernten Überwachungspositionen (12) über das Netz beinhaltet, wobei das Gerät umfaßt:
eine Vorrichtung (17) zum Einrichten erster und zweiter Anrufe bei Netzabschlußpunkten (11, 6) über separate Übertragungspfade im Netz,
eine Vorrichtung (8) zum Aufrechterhalten des Übertragungspfades, der eingerichtet wurde durch einen ersten Anruf, und für das Verbinden des Übertragungspfades über einen Verbindungsport (14) mit einem Signalüberwachungsgerät (16, 28, 29) während des zweiten Anrufs,
dadurch gekennzeichnet, daß
das Überwachungsgerät (12) außerdem Vorrichtungen (30, 32) beinhaltet zum Simulieren normaler Bedingungen im aufgelegten Zustand und beim Anwählen des Verbindungsports (14), wodurch Signale, die an den Netzabschlußpunkt (6, 11) beim Einrichten des zweiten Anrufs übertragen werden, empfangen werden durch das verbundene Überwachungsgerät (16, 18, 29).

2. Testgerät nach Anspruch 1 mit einem Überwachungsgerät (16) für das Anzeigen der Identität einer Anrufleitung.

3. Testgerät nach Anspruch 1 mit einem Gerät (28), das auf Telemetrie oder andere Steuersignale reagiert.

4. Testgerät nach Anspruch 1 mit einem Kurzmitteilungsanzeigesystem (29) für das Überwachen alphanumerischer Signalisierungsdaten.

5. Testgerät nach Anspruch 1 oder mit einem Gerät nach Anspruch 2, 3 oder 4, das außerdem eine Vorrichtung (33) für die akustische Überwachung der Signalisierung auf dem Übertragungspfad beinhaltet.

6. Verfahren zum Testen der Signalisierung in einem Telekommunikationsnetz mit den Schritten: Einrichten eines ersten Anrufs durch ein Netz eines entfernten Punktes, so daß ein Pfad von dem entfernten Punkt zu einem Überwachungsort eingerichtet wird; Aufrechterhalten des Pfades und Freigeben des ersten Anrufs und Einrichten eines zweiten Anrufes des entfernten Punktes,
dadurch gekennzeichnet, daß
die Netzwerkbedingungen an dem Überwachungsort simuliert werden, um das mit dem Ort verbundene Gerät zu veranlassen, auf Netzsignale zu reagieren, die an den entfernten Punkt geschickt werden.

## Revendications

1. Dispositif de test destiné à une connexion à un point de surveillance dans un réseau de télécommunications du type comprenant un moyen destiné à établir une connexion de test au travers du réseau depuis des points de terminaison du réseau (6) vers des positions de surveillance à distance (12), le dispositif comprenant :
un moyen (17) pour provoquer l'établissement de premier et second appels par l'intermédiaire du réseau vers des points de terminaison du réseau (11, 6) au moyen de voies de transmission séparées,
un moyen (8) destiné à conserver la voie de transmission établie par un premier appel et à connecter la voie de transmission par l'intermédiaire d'un point d'accès de connexion (14) à un dispositif de surveillance de signaux (16, 28, 29) durant le second appel, caractérisé en ce que le dispositif de surveillance (12) comprend en outre un moyen (30, 32) pour simuler des conditions de raccrochage normales et de pré-signalisation au point d'accès de connexion (14) d'où il résulte que des signaux transmis vers le point de terminaison du réseau (6, 11) lors de l'établissement du second appel sont reçus par le dispositif de surveillance connecté (16, 18, 29).

2. Dispositif de test selon la revendication 1, en combinaison avec un dispositif de surveillance (16) en vue d'afficher une identité de ligne appelante.

3. Dispositif de test selon la revendication 1, en combinaison avec un dispositif (28) répondant à des signaux de télémesure ou autres signaux de commande.

4. Dispositif de test selon la revendication 1, en combinaison avec un système d'affichage d'un court message (29) destiné à surveillance une signalisation de données alphanumériques.

5. Dispositif de test selon la revendication 1 ou en combinaison avec un autre dispositif selon la revendication 2, 3 et 4, comprenant en outre un moyen (33) destiné à permettre une surveillance audible d'une signalisation sur la voie de transmission.

6. Procédé de test d'une signalisation dans un réseau de télécommunications comprenant les étapes consistant à établir un premier appel par l'intermédiaire d'un réseau vers un point à distance, amener une voie à être établie depuis le point à distance vers un emplacement de surveillance, conserver la voie et libérer le premier appel et établir un second appel vers le point à distance caractérisé en ce que les conditions du réseau sont simulées à l'emplacement de surveillance afin d'amener l'appareil relié à cet emplacement à répondre à des signaux de réseau émis vers le point à distance.
